# EUROPÄISCHE PATENTSCHRIFT

(11) **EP 3 514 418 B1**
(45) Veröffentlichungstag und Bekanntmachung des Hinweises auf die Patenterteilung: **04.03.2020**
(21) Anmeldenummer: 18152679.9
(22) Anmeldetag: 22.01.2018
(51) Int. Cl.: F16K 3/24, F15B 13/04, F16K 27/02, F15B 13/08

(54) **EINBAUVENTIL FÜR EINEN VENTILBLOCK**
CARTRIDGE VALVE FOR A VALVE MANIFOLD
CARTOUCHE DE SOUPAPE POUR UN BLOC DE SOUPAPE

(43) Veröffentlichungstag der Anmeldung: 24.07.2019
(73) Patentinhaber: Parker Hannifin Emea S.A.R.L., 1163 Etoy (CH)
(72) Erfinder: Scheffel, Gerd, Dr., 41352 Korschenbroich (DE); Bunge, Daniel, 40668 Meerbusch (DE)
(74) Vertreter: Feucker, Max Martin

(56) Entgegenhaltungen:
- EP-B1- 2 350 506
- FR-A1- 2 533 656
- US-A- 3 892 384
- US-A- 6 047 734

## Beschreibung

Die vorliegende Erfindung betrifft ein Hydraulik-Einbauventil für einen Ventilblock, umfassend eine in den Ventilblock einbringbare Hülse und ein Schließelement, wobei
- die Hülse mit einem oberen Endbereich fest mit dem Ventilblock verbindbar ist,
- die Hülse einen dem oberen Endbereich gegenüberliegenden unteren Endbereich aufweist, wobei der untere Endbereich
   - in einem Stirnende eine Stirnöffnung aufweist und
   - einen Steckring ausbildet, wobei der Steckring
      - in eine Aufnahmebohrung des Ventilblocks einbringbar ist und
      - einen Außenumfang mit einem Steckringdurchmesser aufweist, und
- die Hülse zwischen dem oberen Endbereich und dem unteren Endbereich einen Mantel ausbildet, wobei der Mantel mehrere durch Stege getrennte Radialöffnungen aufweist, und
- das Schließelement in der Hülse angeordnet ist,
- das Schließelement zwischen einer Öffnungsstellung und einer Sperrstellung beweglich ist, wobei in der Öffnungsstellung eine Fluidverbindung zwischen der Stirnöffnung und den Radialöffnungen freigegeben ist und in der Sperrstellung die Fluidverbindung zwischen der Stirnöffnung und den Radialöffnungen versperrt ist, und
- das Schließelement eine Dichtfläche aufweist, und
- die Hülse auf ihrer Innenseite eine komplementäre Dichtfläche aufweist, wobei
   - die Dichtflächen in der Sperrstellung zur Sperrung der Fluidverbindung miteinander wechselwirken und einen metallischen Dichtsitz ausbilden, wobei
   - die Dichtflächen einen Außenumfang mit einem Dichtflächendurchmesser aufweisen.

Solche Einbauventile werden in der Regel in Ventilblöcke montiert, wobei in dem Ventilblock eine gestufte Bohrung zur Aufnahme der Hülse ausgebildet ist, wobei die gestufte Bohrung eine Hauptbohrung und eine Aufnahmebohrung aufweist. Im montierten Zustand ist der Steckring des Einbauventils in der Aufnahmebohrung der gestuften Bohrung angeordnet. An die Aufnahmebohrung schließt sich eine im Durchmesser kleinere Leitungsbohrung an, die zu einem auch als A-Anschluss bezeichneten Anschluss des Ventilblocks führt. Die Radialöffnungen im Mantel der Hülse sind hingegen im montierten Zustand in der Hauptbohrung der gestuften Bohrung angeordnet, die mit einem auch als B-Anschluss bezeichneten Anschluss des Ventilblocks verbunden ist. Aufgrund der durch ISO 7368:2016 gegebenen Normierung für die gestufte Bohrung des Ventilblocks ist ein entsprechend maximaler Außendurchmesser der entsprechenden Abschnitte der Hülse vorgegeben.

Ein Einbauventil mit den eingangs genannten Merkmalen ist aus EP 2 350 506 B1 bekannt. In der Sperrstellung des Schließelements liegt Hydraulikfluid unter hohem Druck in den Radialöffnungen vor. Dieser Druck sorgt dafür, dass der untere Endbereich der Hülse unter Dehnung der Stege geringfügig von dem oberen, an dem Ventilblock festgelegten Endbereich fortbewegt wird. Der Steckring ist daher in seiner axialen Richtung mit einem gewissen Spiel in der Aufnahmebohrung des Ventilblocks angeordnet. Im Gegensatz hierzu gibt es auch Ausführungen von Einbauventilen, bei denen sich der untere Endbereich mit seiner Stirnfläche an dem Ventilblock abstützt, wobei die Hülse mit ihrem oberen Endbereich mit einem Spiel zu dem Deckel angeordnet ist, sodass aufgrund der durch den Fluiddruck verursachten Längenänderungen der Hülse sich der obere Endbereich der Hülse bewegt. Diese zweite mögliche Ausführung ist nicht Gegenstand der Erfindung, da bei dieser zweiten Ausführung die Hülse nicht fest (unbeweglich) mit dem Ventilblock verbunden ist.

Bei allen bekannten Einbauventilen entspricht der Dichtflächendurchmesser im Wesentlichen dem Durchmesser der Stirnöffnung, welcher wiederum mit dem Durchmesser der zu dem A-Anschluss führenden Leitungsbohrung des Ventilblocks korrespondiert. Da die in Richtung des Steckrings wirkenden Kräfte aufgrund der hohen Fluiddrücke sehr hoch sein können, müssen die Stege zwischen den Radialöffnungen ausreichend stark sein, um ein Bersten der Stege zu verhindern. Insofern begrenzen die erforderlichen Stegbreiten die maximale Größe der Radialöffnungen. Durch die begrenzte Größe der Radialöffnungen wird in der Öffnungsstellung des Schließgliedes aber ein relativ großer Strömungswiderstand verursacht.

Aufgabe der vorliegenden Erfindung ist es daher, die mit Bezug zum Stand der Technik geschilderten Probleme zumindest teilweise zu lösen und insbesondere ein Einbauventil anzugeben, dessen Strömungswiderstand verringerbar ist.

Gelöst wird die Aufgabe durch ein Einbauventil mit den Merkmalen des unabhängigen Anspruchs. Vorteilhafte Weiterbildungen des Einbauventils sind in den abhängigen Ansprüchen und in der Beschreibung angegeben, wobei einzelne Merkmale der vorteilhaften Weiterbildungen in technisch sinnvoller Weise beliebig miteinander kombinierbar sind.

Gelöst wird die Aufgabe insbesondere durch ein Einbauventil mit den eingangs genannten Merkmalen, bei dem der Dichtflächendurchmesser mindestens 90 % des Steckringdurchmessers beträgt, sodass das in der Sperrstellung an den Radialöffnungen anstehende Fluid die Hülse in Richtung des Stirnendes nur außerhalb des Außenumfangs der Dichtfläche mit dem Dichtflächendurchmesser beaufschlagt.

Die Erfindung sieht in ihrem Grundgedanken also vor, dass die in der Sperrstellung auf die Hülse in Richtung des Stirnendes wirkenden Kräfte dadurch verkleinert werden, dass die Fläche, an der das Hydraulikfluid in der Sperrstellung effektiv in Richtung des Stirnendes ansteht, verkleinert wird, indem der Außenumfang der Dichtfläche des Schließelements relativ groß ist. Bevorzugt beträgt der Dichtflächendurchmesser daher mindestens 95 %, besonders bevorzugt mindestens 100 % und ganz besonders bevorzugt mindestens 105 % des Steckringdurchmessers.

Steht in einer bevorzugten Ausführungsform der Mantel im Bereich der Hauptbohrung radial über die Aufnahmebohrung über, so wird durch diesen Überstand keine in Richtung des Stirnendes wirkende Kraft verursacht, da das Hydraulikfluid sowohl innerhalb der Radialöffnungen als auch von unten an diesem überstehenden Bereich ansteht und somit die in diesem überstehenden Bereich nach unten wirkende Kraft kompensiert wird.

Durch Verringerung der in Richtung des Stirnendes auf die Hülse in der Sperrstellung effektiv wirkenden Kräfte können auch die diese Kräfte übertragenden Stege in dem Mantel der Hülse dünner ausgeführt werden, sodass die Radialöffnungen ihrerseits größer ausgeführt sein können. Wenn der Dichtflächendurchmesser größer ist als der Steckringdurchmesser so können auf die Stege sogar Druckkräfte anstatt Zugkräfte wirken. In diesem Fall weist der als Mantel bezeichnete Abschnitt der Hülse einen Außendurchmesser auf, der größer ist als der Steckringdurchmesser. Der Mantel steht dann radial über die Aufnahmebohrung über.

Die Hülse ist beispielsweise durch Einschrauben mit ihrem oberen Endbereich fest und damit unbeweglich mit dem Ventilblock verbindbar. Hierzu weist der obere Endbereich ein Außengewinde auf. Alternativ kann vorgesehen sein, dass der obere Endbereich der Hülse fest und damit unbeweglich mittels eines Deckels mit dem Ventilblock verbindbar ist, wobei der Deckel fest mit dem Ventilblock verbunden, beispielsweise verschraubt werden kann.

Der im unteren Endbereich der Hülse ausgebildete Steckring kann auch als Dichtring bezeichnet werden, welcher im montierten Zustand insbesondere eine Radialdichtung mit der Aufnahmebohrung des Ventilblocks ausbildet, wobei insbesondere eine zusätzliche Weichdichtung zwischen Steckring und Aufnahmebohrung angeordnet ist. Die Weichdichtung ist beispielsweise in der Art eines O-Ringes ausgebildet, welcher bevorzugt in einer in dem Steckring in Umfangsrichtung insbesondere außen umlaufenden Nut angeordnet ist. Die insbesondere einteilig ausgebildete Hülse weist also mit dem oberen Endbereich, mit dem die Radialöffnungen aufweisenden Mantel und mit dem den Steckring ausbildenden unteren Endbereich drei zusammenhängende Abschnitte auf. Die Dichtfläche an der Innenseite der Hülse kann in der Höhe des Mantels, im Übergangsbereich zwischen Mantel und unteren Endbereich oder im unteren Endbereich ausgebildet sein.

Die Dichtfläche auf der Innenseite der Hülse kann beispielsweise so geformt sein, dass das Schließelement mit seiner Dichtfläche in der Sperrstellung auf die Dichtfläche der Hülse aufgedrückt wird, sodass ein metallischer Dichtsitz ausgebildet ist.

Durch die Verringerung der in Richtung des Stirnendes wirkenden Kraft kann auch die Anzahl der Radialöffnungen reduziert werden. Es ist insbesondere vorgesehen, dass in dem Mantel vier oder weniger Radialöffnungen in Umfangsrichtung nebeneinander ausgebildet sind, während die die Radialöffnungen in Umfangsrichtung trennenden Stege an ihrer kürzesten Erstreckung in Umfangsrichtung gemeinsam höchstens 20 %, bevorzugt höchstens 15 % oder sogar höchstens 10 % des Mantelumfangs ausbilden. Dies bedeutet also, dass die Radialöffnungen zumindest in einer quer (orthogonal) zu der Hülsenlängsachse stehenden Ebene mindestens 80 % bevorzugt 90 % des Mantelumfangs ausbilden.

Um den Strömungswiderstand für das Hydraulikfluid in der Öffnungsstellung des Schließelements noch weiter zu reduzieren, kann vorgesehen sein, dass die für das Hydraulikfluid durchströmbare Fläche einer und insbesondere jeder Radialöffnung mindestens 80 %, bevorzugt mindestens 90 % oder sogar 100 % der Fläche der Stirnöffnung der Hülse beträgt.

Soweit die gestufte Bohrung im Ventilblock zusätzlich zu der Aufnahmebohrung für den Steckring eine Hauptbohrung aufweist, in der der Mantel im montierten Zustand des Einbauventils angeordnet ist, weist die Hauptbohrung einen größeren Durchmesser auf als die Aufnahmebohrung für den Steckring. Mit der Erfindung wird es auch ermöglicht, dass der im montierten Zustand in der Hauptbohrung angeordnete Mantel der Hülse im Bereich der Radialöffnungen einen Mantelaußendurchmesser aufweist, der mindestens 10 %, bevorzugt mindestens 20 % größer ist als der Steckringdurchmesser.

In diesem Zusammenhang ist insbesondere bevorzugt, wenn der Außendurchmesser der Hülse unterhalb der Befestigung des oberen Endbereichs an dem Einbauventil oder an dem Deckel bis zu dem die Radialöffnungen aufweisenden Mantel konstant ist. Der Außendurchmesser der Hülse kann also nahezu dem Durchmesser der Hauptbohrung der gestuften Bohrung des Ventilblocks entsprechen, wobei sich der Durchmesser lediglich im Übergangsbereich von dem Mantel zu dem Steckring verkleinert.

Insbesondere wenn das Schließelement selbst so geformt ist, dass in der Sperrstellung durch das Hydraulikfluid ein Druck auf das Schließelement in Richtung des Stirnendes wirkt, so kann vorgesehen sein, dass in der Sperrstellung das Schließelement mit entsprechenden Auskragungen oberhalb der Radialöffnungen in Anschlag mit der Hülse oder mit einem Deckel ist, sodass in Richtung des Stirnendes auf das Schließelement wirkende Kräfte in den Deckel beziehungsweise in die Hülse oberhalb der Radialöffnungen eingeleitet werden.

Die Erfindung betrifft auch eine Ventilanordnung mit einem Ventilblock und einem erfindungsgemäßen Einbauventil, wobei der Ventilblock eine gestufte Bohrung aufweist, in der das Einbauventil angeordnet ist, wobei der Steckring des Einbauventils fluiddicht in eine Aufnahmebohrung der gestuften Bohrung eingebracht ist und der Ventilblock einen der Stirnöffnung zugeordneten A-Anschluss und einen den Radialöffnungen zugeordneten B-Anschluss umfasst.

Insbesondere kann vorgesehen sein, dass das Schließelement in bekannterweise Auskragungen aufweist, mittels derer das Schließelement über einen sogenannten C-Anschluss zwischen der Schließstellung und der Öffnungsstellung bewegt werden kann.

Die gestufte Bohrung des Ventilblocks ist zumindest zweistufig ausgeführt, wobei die gestufte Bohrung die Aufnahmebohrung für den Steckring und eine Hauptbohrung für den Mantel der Hülse umfasst, wobei der die Radialöffnungen aufweisende Mantel einen Mantelaußendurchmesser aufweist, der im Wesentlichen dem Durchmesser der Hauptbohrung entspricht. An die Aufnahmebohrung für den Steckring schließt sich in der Regel eine Leitungsbohrung mit kleinerem Durchmesser an, durch welche das Hydraulikfluid von dem A-Anschluss zu der Stirnöffnung der Hülse geführt wird. In die Hauptbohrung mündet mindestens eine radial ausgerichtete Bohrung, welche dem B-Anschluss zugeordnet ist.

Die Erfindung sowie das technische Umfeld werden im Folgenden anhand der Figuren beispielhaft erläutert. Es zeigen schematisch
- Figur 1:: ein in einem Ventilblock angeordnetes Einbauventil und
- Figur 2:: ein weiteres in einem Ventilblock angeordnetes Einbauventil.

Die in den Figuren nicht maßstabsgetreu dargestellten Ventilanordnungen umfassen jeweils einen Ventilblock 2 und ein in dem Ventilblock 2 angeordnetes Einbauventil 1.

Der Ventilblock 2 weist eine gestufte Bohrung mit einer Hauptbohrung 21 und einer Aufnahmebohrung 10 auf. In die Hauptbohrung 21 mündet eine einem B-Anschluss 20 zugeordnete radiale Bohrung. An die Aufnahmebohrung 10 schließt sich eine Leitungsbohrung 24 an, die zu einem A-Anschluss 19 führt. Die Leitungsbohrung 24 weist einen kleineren Durchmesser auf als die Aufnahmebohrung 10.

Die Einbauventile 1 umfassen jeweils eine Hülse 3 und ein beweglich in der Hülse 3 gelagertes Schließelement 4.

Die Hülse 3 weist einen oberen Endbereich 5 auf, der zumindest indirekt über einen Deckel 22 fest und damit unbeweglich mit dem Ventilblock 2 verbunden ist. Unterhalb des oberen Endbereichs 5 bildet die Hülse 3 einen Mantel 12 mit einem Mantelaußendurchmesser 18 aus. In dem Mantel 12 sind Radialöffnungen 14 ausgebildet. Die Radialöffnungen 14 sind in Umfangsrichtung durch Stege 13 voneinander getrennt.

Unterhalb des Mantels 12 bildet die Hülse 3 einen unteren Endbereich 6 aus. Dieser untere Endbereich 6 weist ein Stirnende 7 mit einer darin ausgebildeten Stirnöffnung 8 auf. Der untere Endbereich 6 bildet zudem einen Steckring 9 aus, der im montierten Zustand in der Aufnahmebohrung 10 des Ventilblocks 2 angeordnet ist, wobei ein O-Ring eine Weichdichtung zwischen Steckring 9 und Aufnahmebohrung 10 ausbildet. Der Steckring 9 weist einen Steckringdurchmesser 11 auf.

Das Schließelement 4 bildet an seinem unteren Ende eine Dichtfläche 15 aus, die in der in den Figuren gezeigten Sperrstellung mit einer als Dichtsitz ausgebildeten Dichtfläche 16 auf der Innenseite der Hülse 3 wechselwirkt. Die Dichtflächen 15, 16 weisen einen Außenumfang mit einem Dichtflächendurchmesser 17 auf. In der in den Figuren gezeigten Sperrstellung ist eine Fluidverbindung zwischen der Stirnöffnung 8 und den Radialöffnungen 14 unterbunden. Das in der Sperrstellung an den Radialöffnungen 14 anstehende Hydraulikfluid wirkt nur außerhalb der Dichtflächen 15, 16 in Richtung des unteren Endbereichs 6 auf die Hülse 3.

Um in der Sperrstellung die effektiv nach unten wirkende Kraft zu verringern oder gar zu eliminieren, entspricht die Größe des Dichtflächendurchmessers 17 des Außenumfangs der Dichtflächen 15, 16 in etwa der Größe des Steckringdurchmessers 11 des Steckrings 9. Wie aus den Zeichnungen zu erkennen ist, wird die in den Radialöffnungen 14 außerhalb des Steckringdurchmessers 11 nach unten wirkende Fluidkraft dadurch kompensiert, dass das über den B-Anschluss 20 anstehende Hydraulikfluid auch von unten auf den über die Aufnahmebohrung 10 überstehenden Bereich des Mantels 12 wirkt.

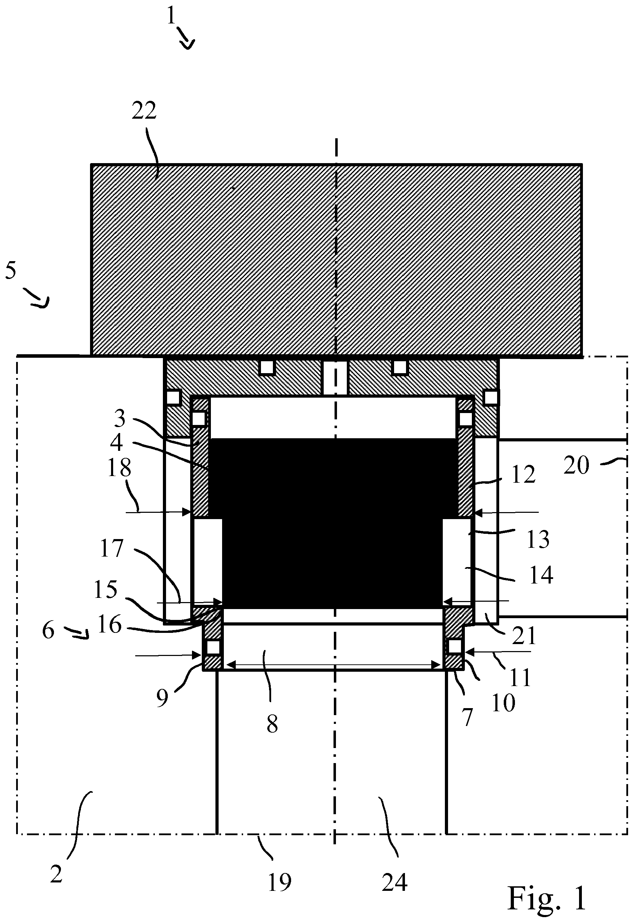

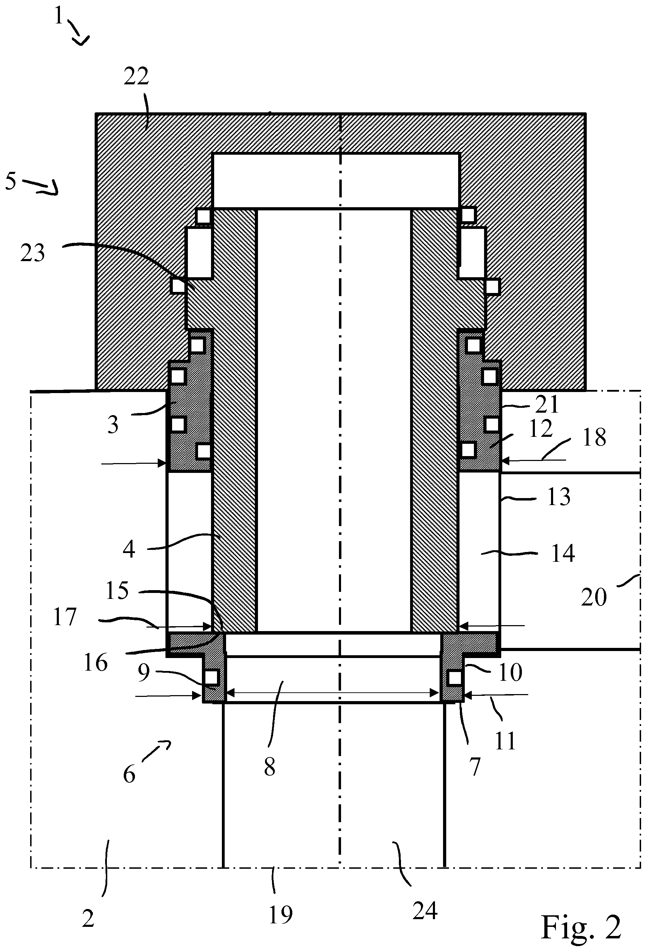

Während das in Figur 1 dargestellte Einbauventil 1 aufgrund der oberhalb des Schließelements 4 und an den Anschlüssen 19, 20 anliegenden Drücke zwischen Öffnungsstellung und Schließstellung in bekannter Weise geschaltet wird, kann das in der Figur 2 dargestellte Einbauventil 1 durch Druckbeaufschlagung der oberhalb und unterhalb der Auskragung 23 angeordneten Ringräume zwischen Öffnungsstellung und Schließstellung in bekannter Weise geschaltet werden.

### Bezugszeichenliste

- 1: Einbauventil
- 2: Ventilblock
- 3: Hülse
- 4: Schließelement
- 5: oberer Endbereich
- 6: unterer Endbereich
- 7: Stirnseite
- 8: Stirnöffnung
- 9: Steckring
- 10: Aufnahmebohrung
- 11: Steckringdurchmesser
- 12: Mantel
- 13: Steg
- 14: Radialöffnung
- 15: Dichtfläche (Schließelement)
- 16: Dichtfläche (Hülse)
- 17: Dichtflächendurchmesser
- 18: Mantelaußendurchmesser
- 19: A-Anschluss
- 20: B-Anschluss
- 21: Hauptbohrung
- 22: Deckel
- 23: Auskragung
- 24: Leitungsbohrung

## Patentansprüche

1. Hydraulik-Einbauventil (1) für einen Ventilblock (2), umfassend eine in den Ventilblock (2) einbringbare Hülse (3) und ein Schließelement (4), wobei
- die Hülse (3) mit einem oberen Endbereich (5) fest mit dem Ventilblock (2) verbindbar ist,
- die Hülse (3) einen dem oberen Endbereich (5) gegenüberliegenden unteren Endbereich (6) aufweist, wobei der untere Endbereich (6)
- in einem Stirnende (7) eine Stirnöffnung (8) aufweist und
- einen Steckring (9) ausbildet, wobei der Steckring (9)
- in eine Aufnahmebohrung (10) des Ventilblocks (2) einbringbar ist und
- einen Außenumfang mit einem Steckringdurchmesser (11) aufweist, und
- die Hülse (3) zwischen dem oberen Endbereich (5) und dem unteren Endbereich (6) einen Mantel (12) ausbildet, wobei der Mantel (12) mehrere durch Stege (13) getrennte Radialöffnungen (14) aufweist, und
- das Schließelement (4) in der Hülse (3) angeordnet ist,
- das Schließelement (4) zwischen einer Öffnungsstellung und einer Sperrstellung beweglich ist, wobei in der Öffnungsstellung eine Fluidverbindung zwischen der Stirnöffnung (8) und den Radialöffnungen (14) freigegeben ist und in der Sperrstellung die Fluidverbindung zwischen der Stirnöffnung (8) und den Radialöffnungen (14) versperrt ist, und
- das Schließelement (4) eine Dichtfläche (15) aufweist, und
- die Hülse (3) auf ihrer Innenseite eine komplementäre Dichtfläche (16) aufweist, wobei
- die Dichtflächen (15, 16) in der Sperrstellung zur Versperrung der Fluidverbindung miteinander wechselwirken und einen metallischen Dichtsitz ausbilden, wobei
- die Dichtflächen (15, 16) einen Außenumfang mit einem Dichtflächendurchmesser (17) aufweisen,
**dadurch gekennzeichnet, dass** der Dichtflächendurchmesser (17) mindestens 90% des Steckringdurchmessers (11) beträgt.

2. Hydraulik-Einbauventil (1) nach Anspruch 1, wobei in dem Mantel (12) vier oder weniger Radialöffnungen (14) in Umfangsrichtung nebeneinander ausgebildet sind und wobei die die Radialöffnungen (14) trennenden Stege (13) an ihrer kürzesten Erstreckung in Umfangsrichtung gemeinsam höchstens 20 % des Mantelumfangs ausbilden.

3. Hydraulik-Einbauventil (1) nach Anspruch 1 oder 2, wobei die Fläche genau einer Radialöffnung (14) mindestens 80 % der Fläche der Stirnöffnung (8) der Hülse (3) beträgt.

4. Hydraulik-Einbauventil (1) nach einem der vorhergehenden Ansprüche, wobei die Hülse (3) im Bereich der Radialöffnungen (14) einen Mantelaußendurchmesser (18) aufweist, der mindestens 10 % größer ist als der Steckringdurchmesser (11).

5. Hydraulik-Einbauventil (1) nach Anspruch 4, wobei der Außendurchmesser der Hülse vom oberen Endbereich (5) bis zu dem die Radialöffnungen (14) aufweisenden Mantel (12) konstant ist.

6. Hydraulik-Einbauventil (1) nach einem der vorhergehenden Ansprüche, wobei in der Sperrstellung das Schließelement (4) mit einer Auskragung (23) oberhalb der Radialöffnungen (14) in Anlage mit der Hülse (3) oder mit einem Deckel (22) ist, sodass in Richtung des unteren Endbereichs (6) auf das Schließelement (4) wirkende Kräfte in den Deckel (22) beziehungsweise in die Hülse (4) oberhalb der Radialöffnungen (14) eingeleitet werden.

7. Ventilanordnung mit einem Ventilblock (2) und einem Hydraulik-Einbauventil (1) nach einem der vorhergehenden Ansprüche, wobei der Ventilblock (2) eine gestufte Bohrung aufweist, in der das Hydraulik-Einbauventil (1) angeordnet ist, wobei der Steckring (9) des Einbauventils (1) fluiddicht in eine Aufnahmebohrung (10) der gestuften Bohrung eingebracht ist und der Ventilblock (2) einen der Stirnöffnung (8) zugeordneten A-Anschluss (19) und einen den Radialöffnungen (14) zugeordneten B-Anschluss (20) umfasst.

8. Ventilanordnung nach Anspruch 7, wobei die gestufte Bohrung zumindest zweistufig mit der Aufnahmebohrung (10) für den Steckring (9) und einer Hauptbohrung (21) für den Mantel (12) der Hülse (3) ausgebildet ist, wobei der die Radialöffnungen (14) aufweisende Mantel (12) einen Mantelaußendurchmesser (18) aufweist, der im Wesentlichen dem Durchmesser der Hauptbohrung (21) entspricht.

## Claims

1. Hydraulic built-in valve (1) for a valve block (2), comprising a sleeve (3) which can be arranged in the valve block (2) and a closing element (4), wherein
- the sleeve (3) can be fixedly connected via an upper end region (5) to the valve block (2),
- the sleeve (3) comprises a lower end region (6) opposite to the upper end region (5), wherein the lower end region (6)
- has a face opening (8) in one end face (7) and
- forms a plug ring (9), wherein the plug ring (9)
- can be introduced into a locating hole (10) in the valve block (2) and
- has an outer circumference with a plug ring diameter (11), and
- the sleeve (3) forms a shell (12) between the upper end region (5) and the lower end region (6), wherein the shell (12) has a plurality of radial openings (14) separated by bridges (13), and
- the closing element (4) is arranged in the sleeve (3),
- the closing element (4) is movable between an opening position and a blocking position, wherein in the opening position a fluid connection is enabled between the face opening (8) and the radial openings (14), and in the blocking position the fluid connection between the face opening (8) and the radial openings (14) is blocked, and
- the closing element (4) has a sealing surface (15), and
- the sleeve (3) has a complementary sealing surface (16) on the inner side thereof, wherein
- when in the blocking position the sealing surfaces (15, 16) cooperate with each other to block the fluid connection and form a metal sealing seat, wherein
- the sealing surfaces (15, 16) have an outer circumference with a sealing surface diameter (17),
**characterized in that** the sealing surface diameter (17) is equal to at least 90% of the plug ring diameter (11).

2. Hydraulic built-in valve (1) according to Claim 1, wherein four or fewer radial openings (14) are formed adjacent to each other in the circumferential direction, and wherein at their shortest extension the bridges (13) that separate the radial openings (14) together make up not more than 20% of the shell (12) in the circumferential direction.

3. Hydraulic built-in valve (1) according to Claim 1 or 2, wherein the area of exactly one radial opening (14) is equal to at least 80% of the area of the face opening (8) of the sleeve (3).

4. Hydraulic built-in valve (1) according to any one of the preceding claims, wherein the sleeve (3) has an outer shell diameter (18) in the region of the radial opening (14) which is at least 10% larger than the plug ring diameter (11).

5. Hydraulic built-in valve (1) according to Claim 4, wherein the outer diameter of the sleeve is constant from the upper end region (5) to the shell (12) having the radial openings (14).

6. Hydraulic built-in valve (1) according to any one of the preceding claims, wherein in the blocking position a projection (23) of the closing element (4) bears on the sleeve (3) or on a cap (22) above the radial openings (14), so that forces acting on the closing element (4) in the direction of the lower end region (6) are directed into the cap (22) and/or into the sleeve (4) above the radial openings (14).

7. Valve assembly having a valve block (2) and a hydraulic built-in valve (1) according to any one of the preceding claims, wherein the valve block (2) has a stepped hole in which the hydraulic built-in valve (1) is arranged, wherein the plug ring (9) of the hydraulic built-in valve (1) is installed in a locating hole (10) of the stepped hole in fluid-tight manner, and the valve block (2) comprises an A-port (19) assigned to the face opening (8) and a B-port (20) assigned to the radial openings (14).

8. Valve assembly according to Claim 7, wherein the stepped hole is constructed with at least two steps, with the locating hole (10) for the plug ring (9) and a main hole (21) for the shell (12) of the sleeve (3), wherein the shell (12) having the radial openings (14) has an outer shell diameter (18) which is substantially equal to the diameter of the main hole (21).

## Revendications

1. Soupape hydraulique intégrée (1) pour bloc de soupape (2), comprenant un manchon (3) pouvant être introduit dans le bloc de soupape (2) et un élément de fermeture (4), dans lequel
- le manchon (3) peut être connecté fixement par une partie terminale supérieure (5) au bloc de soupape (2),
- le manchon (3) présente une partie terminale inférieure (6) opposée à la partie terminale supérieure (5), la partie terminale inférieure (6)
- présentant dans une extrémité frontale (7) une ouverture frontale (8) et
- constituant un anneau de fichage (9), l'anneau de fichage (9)
- pouvant être installé dans un orifice récepteur (10) du bloc de soupape (2) et
- présentant une circonférence extérieure ayant le diamètre de l'anneau de fichage (11), et
- le manchon (3) constituant une chemise (12) entre la partie terminale supérieure (5) et la partie terminale inférieure (6), la chemise (12) présentant plusieurs ouvertures radiales (14) séparées par des traverses (13), et
- l'élément de fermeture (4) étant disposé dans le manchon (3),
- l'élément de fermeture (4) étant mobile entre une position d'ouverture et une position de blocage, une connexion fluidique entre l'ouverture frontale (8) et les ouvertures radiales (14) étant débloquée en position d'ouverture et la connexion fluidique entre l'ouverture frontale (8) et les ouvertures radiales (14) étant bloquée en position de blocage, et
- l'élément de fermeture (4) présentant une surface d'étanchéité (15), et
- le manchon (3) présentant sur sa face interne une surface d'étanchéité complémentaire (16),
- les surfaces d'étanchéité (15, 16) interagissant entre elles en position de blocage pour bloquer la connexion fluidique et constituant un siège d'étanchéité métallique,
- les surfaces d'étanchéité (15,16) présentant une circonférence extérieure ayant le diamètre de la surface d'étanchéité (17),
**caractérisé en ce que** le diamètre de la surface d'étanchéité (17) représente au moins 90% du diamètre de l'anneau de fichage (11).

2. Soupape hydraulique intégrée (1) selon la revendication 1, dans laquelle, dans la chemise (12) quatre ouvertures radiales ou moins (14) sont pratiquées les unes près des autres dans le sens circonférentiel et les traverses (13) séparant les ouvertures radiales (14) représentent en commun, au niveau de leur plus courte extension dans le sens circonférentiel, au plus 20% de la circonférence de la chemise.

3. Soupape hydraulique intégrée (1) selon la revendication 1 ou 2, dans laquelle la surface de précisément une ouverture radiale (14) représente au moins 80% de la surface de l'ouverture frontale (8) du manchon (3).

4. Soupape hydraulique intégrée (1) selon une des revendications précédentes, dans laquelle le manchon (3) présente, au niveau des ouvertures radiales (14), un diamètre extérieur de chemise (18) qui est au moins 10% supérieur au diamètre de la bague de fichage (11).

5. Soupape hydraulique intégrée (1) selon la revendication 4, dans laquelle le diamètre extérieur du manchon, de la partie terminale supérieure (5) jusqu'à la chemise (12) présentant les ouvertures radiales (14), est constant.

6. Soupape hydraulique intégrée (1) selon une des revendications précédentes, dans laquelle, en position de blocage, l'élément de fermeture (4) est, par une collerette (23) située au-dessus des ouvertures radiales (14), en contact avec le manchon (3) ou avec un couvercle (22), de sorte que des forces agissant en direction de la partie terminale inférieure (6) sur l'élément de fermeture (4) sont conduites dans le
couvercle (22) ou dans le manchon (4) au-dessus des ouvertures radiales (14).

7. Dispositif de soupape comportant un bloc de soupape (2) et une soupape hydraulique intégrée (1) selon une des revendications précédentes, dans lequel le bloc de soupape (2) présente un alésage échelonné dans lequel est disposée la soupape hydraulique intégrée (1), l'anneau de fichage (9) de la soupape intégrée étant installé de manière étanche au fluide dans un alésage récepteur (10) de l'alésage échelonné et le bloc de soupape (2) comprenant un raccord A (19) associé à l'ouverture frontale (8) et un raccord B (20) associé aux ouvertures radiales (14).

8. Dispositif de soupape selon la revendication 7, dans lequel l'alésage échelonné est réalisé au moins en deux échelons avec l'alésage récepteur (10) pour l'anneau de fichage (9) et un alésage principal (21) pour la chemise (12) du manchon (3), la chemise (12) présentant les ouvertures radiales (14) présentant un diamètre extérieur de chemise (18) qui équivaut sensiblement au diamètre de l'alésage principal (21).
